# FASCICULE DE BREVET EUROPEEN

(11) **EP 4 152 952 B1**
(45) Date de publication et mention de la délivrance du brevet: **19.08.2026**
(21) Numéro de dépôt: 21735342.4
(22) Date de dépôt: 19.05.2021
(51) Int. Cl.: A23L 15/00, A23L 17/60

(54) **SUBSTITUT D'OEUF À BASE DE MICROALGUES**
EIERSATZ AUF MIKROALGENBASIS
MICROALGAE-BASED EGG SUBSTITUTE

(30) Priorité: 19.05.2020 FR 2005043
(43) Date de publication de la demande: 29.03.2023
(73) Titulaire: Algama, 75002 Paris (FR)
(72) Inventeur: BARRE, Pauline, 78200 Mantes-La-Jolie (FR); TRAORE, Camille, 92130 Issy-les-Moulineaux (FR)
(74) Mandataire: Yes My Patent
(86) Numéro de dépôt international: PCT/FR2021/050890
(87) Numéro de publication internationale: WO 2021/234293

(56) Documents cités:
- WO-A1-2013/067453
- WO-A1-2017/014806
- WO-A1-2017/014967
- AT-B1- 519 626
- CA-A1- 2 749 638
- US-A1- 2011 008 522
- US-A1- 2013 084 361
- ANONYMOUS: "Natural Egg Replacer", GNPD, March 2015 (2015-03-01), XP002756548
- DATABASE GNPD [online] MINTEL; 19 July 2017 (2017-07-19), ANONYMOUS: "Vegan Egg Substitute", XP055747909, retrieved from www.gnpd.com Database accession no. 4964571
- DATABASE GNPD [online] MINTEL; 4 July 2016 (2016-07-04), ANONYMOUS: "Vegan Egg", XP055747910, retrieved from www.gnpd.com Database accession no. 4118561
- DATABASE GNPD [online] MINTEL; 27 August 2019 (2019-08-27), ANONYMOUS: "No Egg Egg Replacer", XP055839609, retrieved from https://www.gnpd.com/sinatra/recordpage/6815475/ Database accession no. 6815475

## Description

### DOMAINE DE L'INVENTION

La présente invention concerne un substitut d'œuf à base de microalgue permettant selon un mode de réalisation également de réduire la teneur en matière grasse et en sucre d'un produit alimentaire dans lequel il est incorporé. L'invention concerne également le procédé d'obtention dudit substitut d'œuf à base de microalgue, comprenant des étapes d'ajouts de différents composés dont un produit de microalgues. Enfin, l'invention concerne également l'utilisation dudit substitut d'œuf dans un produit alimentaire, un procédé d'incorporation dudit substitut d'œuf dans la préparation d'un produit alimentaire, et ledit produit alimentaire comprenant ledit substitut d'œuf.

La présente invention s'inscrit dans le domaine des substituts alimentaires, et plus particulièrement dans celui des substituts d'œuf à base de microalgues destinés à être utilisés dans des produits de boulangerie, pâtisserie, viennoiserie et autres préparations alimentaires.

L'invention est définie par les revendications annexées 1-10.

### ETAT DE LA TECHNIQUE

L'œuf est un produit incontournable en industries agroalimentaires. Par sa polyvalence, il est présent dans divers secteurs agroalimentaires mais son utilisation la plus importante reste dans les domaines de la boulangerie, pâtisserie, viennoiserie, et biscuiterie. On le retrouve dans l'ensemble des produits de type gâteaux moelleux, bases de pâtes, biscuits secs ou encore préparations briochées.

Cependant les œufs posent de plus en plus de questions, principalement en termes de :
- Bien-être animal : conditions de vie des poules pondeuses, durée de vie des poules pondeuses (abattage dès la baisse des pontes, débats sur les techniques d'abattage des poussins mâles "inutiles" pour cette industrie) ...
- Environnement : pollution des élevages de masse, transports, chauffage, origine de l'alimentation...
- Nutrition : questions du cholestérol, des acides gras saturés, des allergies
- Santé publique : œufs au fipronil, salmonelles ....
- Coûts : instabilité du cours des œufs

Pour certaines ou l'ensemble de ces raisons les consommateurs, en particulier les véganes, flexitariens et végétariens cherchent une alternative durable aux œufs qui soit sans allergènes, faible en matières grasses saturées et qui puisse remplacer l'œuf dans divers produits du quotidien.

Des ingrédients de "remplacement" aux œufs existent et sont souvent utilisés dans les préparations simples comme par exemple l'utilisation d'une banane écrasée, des graines de lin ou de chia trempées dans de l'eau, de compote de pommes... mais ces options ne remplissent qu'une fonction liante et pas les fonctions plus techniques de l'œuf.

Les substituts d'œufs véganes, comme par exemple VeganEgg de Follow Your Heart, ou comme le produit "Natural Egg replacer" de la marque MyEy décrit dans la base de données GNPD Mintel avec le numéro d'accession 3020675 (Mars 2015), peuvent, quant à eux, contenir des ingrédients polémiques comme certains additifs controversés (Pyrophosphate de tetrasodium, Sodium Carboxymethylcellulose...) et/ou certains allergènes comme du soja ou du lupin.

D'autre part, l'obésité dans le monde a triplé depuis 1975. La cause principale étant l'augmentation de la consommation de graisses et de sucre.

La consommation de produits de type snacks sucrés, dont les biscuits et gâteaux, est très importante notamment en Europe, aux USA et au Mexique. Elle contribue à l'épidémie d'obésité et de surpoids chez les adultes mais aussi chez les plus jeunes. En effet, l'apport en sucres ajoutés provient majoritairement de ce type de produits (36% à 61% chez les adultes et de 40% à 50% chez les enfants en Europe). Ces produits de snacks sont très souvent riches en gras. Or, une trop grande consommation de gras est corrélée au surpoids et à l'obésité ainsi qu'à d'autres types de maladies comme le diabète ou les maladies cardiovasculaires.

Ainsi, il perdure le besoin d'un substitut d'œuf gardant les propriétés techniques de l'œuf et permettant également selon un mode de réalisation de réduire la teneur en matière grasse et en sucre des produits alimentaires dans lesquels il est incorporé, sans changer l'apparence dudit produit alimentaire et ses qualités organoleptiques de manière significative.

Pour ce faire, la Demanderesse a développé un substitut d'œuf à base de produits provenant de microalgues, et répondant à ces besoins. Ce substitut d'œuf est polyvalent, facile à utiliser, à un apport nutritif intéressant, est sain, remplit des fonctions essentielles de l'œuf, et peut notamment être utilisé dans des préparations de snacks, de pâtisserie et de boulangerie, et selon un mode de réalisation d'y abaisser les taux de sucres et/ou de graisses, sans en changer les qualités organoleptiques.

### EXPOSE DE L'INVENTION

Il est à cet effet proposé, selon un premier aspect de l'invention, un substitut d'œuf à base de microalgue, caractérisé en ce qu'il comprend :
- de 40% à 90%, de préférence de 40% à 80%, de manière encore plus préférée de 50% à 75%, en poids total dudit substitut d'au moins une farine végétale non-microalgale et/ou d'au moins une fécule végétale non-microalgale, lesdites farines et fécules étant choisies parmi : farine de riz, farine de maïs, farine de tapioca, farine de lentilles, farine de quinoa, farine de millet, farine de sarrasin, fécule de maïs, fécule de pomme de terre, fécule de riz, fécule de tapioca ;
- de 8 à 30%, de préférence de 10% à 30%, de manière encore plus préférée de 12% à 24%, en poids total dudit substitut d'au moins une protéine végétale non-microalgale, choisi parmi : aquafaba déshydraté, protéines de chia, protéines de pois, protéines de fèves, protéines de lin, protéines de haricots mungo, protéines de pois chiche, protéines de petits pois, protéines de pomme de terre;
- de 1% à 15%, de préférence de 3% à 15%, de manière encore plus préférée de 5% à 12%, en poids total dudit substitut d'au moins un produit issu de microalgues provenant de Chlorella ou Arthrospira, ledit au moins un produit issu de microalgues étant choisi parmi : farine de microalgues, protéines issues de microalgues, lipides issus de microalgues, extraits de microalgues ;
- de 0,2% à 10%, de préférence de 0,2% à 5%, en poids total dudit substitut d'au moins une fibre végétale non-microalgale choisie parmi : fibres d'avoine, fibres de blé, fibres de pommes, fibres d'agrumes, fibres de citron, fibres de psyllium ;
- de 0,1% à 2% en poids total dudit substitut d'au moins un agent épaississant d'origine végétale choisi parmi : gomme guar, gomme xanthane, gomme gellan, gomme de caroube, gomme arabique, gomme tara, alginate, agar agar, carraghénanes, et ses dérivés.

Par substitut d'œuf est entendu selon l'invention un mélange permettant de mimer les propriétés intrinsèques de l'œuf entier, à savoir son pouvoir épaississant, liant, et permettre de rendre les produits alimentaires obtenus moelleux, et rendant ainsi inutile l'ajout d'œuf dans la préparation.

Ledit substitut peut être sous forme de poudre ou sous forme de mélange liquide avec de l'eau.

De manière préférée selon l'invention, ledit substitut d'œuf comprend de 0,1% à 16% en poids total dudit substitut d'au moins un colorant.

De manière préférée selon l'invention, ledit substitut d'œuf comprend de 0,1 % à 16% en poids total dudit substitut d'au moins un arôme.

Des arômes sont ajoutés selon un mode de réalisation, quand ledit substitut a pour but également de réduire les taux de sucre et de graisse dans le produit alimentaire dans lequel il sera incorporé.

Par farine végétale est entendue selon l'invention des poudres fines obtenus en broyant tout type de céréales, de légumineuses ou même de fruits.

Par fécule végétale est entendue selon l'invention une matière amylacée granuleuse de dimensions variables extraite de divers organes végétaux, comme les tubercules, les rhizomes ou les céréales.

Par protéine végétale est entendue selon l'invention des protéines extraites de végétaux.

Par microalgues, on entend désigner selon la présente invention les microalgues eucaryotes, qui sont caractérisée par un noyau, comprenant par exemple les chlorophytes, les rhodophytes, les haptophytes, les bacillariophytes, les eustigmatophytes, les euglenophytes, les thraustochytriaceae ou encore les dinophytes, lesdits microalgues eucaryotes étant communément dénommées « microalgues », et les microalgues procaryotes, qui ne possèdent pas de noyau, comprenant les cyanophytes, ci-après dénommées spécifiquement « cyanobactéries »

Selon un mode de réalisation de l'invention, ledit au moins un produit issu de microalgues provient de Chlorella ou de Arthrospira.

Par non-microalgale est entendue selon l'invention que le composé mentionné ne provient pas d'une source microalgale, mais d'une autre source végétale.

Par fibre végétale est entendue selon l'invention les expansions cellulaires filiformes et mortes, principalement composée de cellulose, d'hémicelluloses, de lignines, et de pectines, les polymères glucidiques transformés (physiquement, enzymatiquement ou chimiquement) d'origine végétale, associés ou non dans la plante à de la lignine ou à d'autres constituants non glucidiques (polyphénols, cires, saponines, cutine, phytates, phytostérols...).

Par épaississant est entendue selon l'invention un composé qui permet d'augmenter la consistance et la viscosité d'une préparation plus ou moins liquide. Il apporte de la tenue à l'aliment.

Par colorant est entendu selon l'invention un additif ou denrée à propriétés colorantes qui permet de donner de la couleur au produit.

Par arôme on entend désigner selon la présente invention un additif alimentaire permettant de donner du goût et/ou une odeur au produit.

De manière préférée, ledit au moins un colorant est choisi parmi : colorants d'origine synthétiques, colorants d'origine naturelle, épices.

De manière préférée, ledit au moins un arôme est choisi parmi : arômes synthétiques, arômes naturels, épices.

Des exemples d'arômes sont : les arômes de vanille, les arômes de crème, arôme de beurre.

Des exemples de colorants sont : le curcuma, curcumine, beta-carotène, poudre de tomate, poudre de carotte.

Le substitut d'œuf selon l'invention est végane, sans allergène, sans cholestérol, sans gluten. Il peut également selon un mode de réalisation contribuer à réduire les lipides, les acides gras saturés, le sucre, le cholestérol et le sodium.

Concernant les lipides, ledit substitut selon l'invention comprend moins de 2% de lipides alors qu'un œuf en poudre va présenter plus de 42% de lipides.

Exemple de composition selon l'invention avec arôme :

**[Table 1]**

| Composition 1 (%) | |
|---|---|
| Protéines de chia | 24 |
| Fibres de citron | 1,8 |
| Farine de riz + Fécule de maïs | 60,3 |
| Gomme xanthane | 0,6 |
| Microalgues : Chlorella | 12 |
| Arôme vanille | 0,1 |
| Poudre de carotte + poudre de tomate | 1,2 |

Exemple de composition selon l'invention avec arôme :

**[Table 2]**

| **Composition** 2 (%) | |
|---|---|
| Protéines de riz | 21,9 |
| Fibres de psyllium | 5 |
| Fécule de pomme de terre | 51,9 |
| Gomme xanthane | 0,9 |
| Microalgues : Extraits de Arthrospira | 10 |
| Arôme vanille + arôme crème | 14 |
| Poudre de tomate + curcuma | 1,4 |

Exemple de composition selon l'invention sans arôme :

**[Table 3]**

| **Composition** 3 (%) | |
|---|---|
| Protéines de pois | 18 |
| Fibres de blé | 2 |
| Fécule de maïs + Fécule de tapioca | 66,5 |
| Gomme guar | 1,5 |
| Microalgues : Extrait d'Arthrospira | 11 |
| Curcuma | 1 |

Exemple de composition selon l'invention sans arôme :

**[Table 4]**

| Composition 4 (%) | |
|---|---|
| Protéines de pois chiche | 17 |
| Fibres d'avoine | 1,8 |
| Fécule de maïs + Fécule de pomme de terre | 71,3 |
| Gomme guar | 1,2 |
| Microalgues : Chlorella | 8 |
| Poudre de carotte | 0,7 |

Selon un deuxième aspect, l'invention concerne un procédé d'obtention d'un substitut d'œuf à base de microalgue selon l'invention, comprenant au moins une étape de mélange desdits composés, de préférence à entre 100 et 3000 rpm, de manière encore plus préférée à entre 100 à 1000 rpm, de manière encore plus préférée à 500 rpm, de préférence pendant entre 60 et 350 secondes, de manière encore plus préférée entre 60 et 120 secondes, de manière encore plus préférée 90 secondes.

Par composés sont entendu les différents produits ajoutés à la préparation, à savoir notamment au moins une farine végétale non-microalgale et/ou d'au moins une fécule végétale non-microalgale, au moins une protéine végétale non-microalgale, au moins un produit issu de microalgues, au moins une fibre végétale non-microalgale, au moins un agent épaississant d'origine végétale, au moins un colorant.

Selon un mode de réalisation, ledit procédé d'obtention d'un substitut d'œuf à base de microalgue selon l'invention comprenant les étapes de :
a. Mélanger en agitant à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
   - Au moins un épaississant d'origine végétale ; et
   - Optionnellement au moins un colorant et/ou au moins un arôme ;
b. Ajouter au mélange obtenu à l'étape a., en agitant à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
   - Au moins un produit issu de microalgues ; et
   - Au moins une fibre végétale non-microalgale ;
c. Ajouter au mélange obtenu à l'étape b., à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
   - Au moins une farine végétale non-microalgale et/ou fécule végétale non-microalgale ; et
   - Au moins une protéine végétale non-microalgale ;
e. Obtenir un substitut d'œuf à base de microalgue.

L'agitation aux différentes étapes du procédé selon l'invention pourra se faire par différents types de mélangeurs, par exemple des mélangeurs à cuves mobiles, mélangeurs malaxeurs, mélangeurs à vis, etc.

Lesdits composés utilisés dans le procédé selon l'invention et le substitut d'œuf obtenu à l'étape c. sont sous forme de poudre.

Selon un mode de réalisation, le procédé comprend une étape d. de mélange du substitut d'œuf sous forme de poudre obtenu à l'étape c. avec de l'eau, de préférence à un rapport d'une part de poudre obtenue à l'étape c. pour de 6 à 9 parts d'eau, à entre 100 à 5000 rpm, de préférence entre 500 et 2000, de manière encore plus préférée 800 rpm, pendant de 3 à 7 minutes.

L'étape optionnelle d. permet d'obtenir une version « liquide » dudit substitut.

Selon un troisième aspect, l'invention concerne l'utilisation du substitut d'œuf selon l'invention dans la préparation d'un produit alimentaire, de préférence dans la préparation de génoise, de base pour dessert, de pâte à dessert, de pâtisserie, de viennoiserie, de produit de boulangerie, ou de biscuits.

Selon un quatrième aspect, l'invention concerne un procédé d'incorporation du substitut d'œuf à base de microalgue selon l'invention dans un produit alimentaire, comprenant l'incorporation dans la préparation du produit alimentaire d'entre 0,5 et 5% du poids total du produit alimentaire du substitut d'œuf à base de microalgue selon l'invention.

Par incorporation est entendu selon l'invention l'ajout dans la préparation avec les autres composés du substitut selon l'invention.

Selon un cinquième aspect, l'invention concerne un produit alimentaire comprenant entre 0,5 et 5% en poids dudit produit alimentaire du substitut d'œuf à base de microalgue selon l'invention.

Selon un mode de réalisation, ledit substitut d'œuf à base de microalgue selon l'invention est ajouté dans une préparation de produits boulangers, de préférence des pains briochés, à une teneur de 2,1% en poids de la préparation totale.

Selon un mode de réalisation, ledit substitut d'œuf à base de microalgue selon l'invention est ajouté dans une préparation de cookies, à une teneur de 1% en poids de la préparation totale.

Selon un mode de réalisation, ledit substitut d'œuf à base de microalgue selon l'invention est ajouté dans une préparation de cupcakes, à une teneur de 3,4% en poids de la préparation totale.

Ledit substitut d'œuf selon l'invention peut être sous forme de poudre tel qu'obtenu à l'étape d. du procédé selon l'invention, ou liquide tel qu'obtenu à l'étape e. du procédé selon l'invention.

De manière préférée, la teneur en matière grasse du produit alimentaire dans lequel le substitut selon l'invention est incorporé est réduite d'une quantité allant jusqu'à 50%.

De manière préférée, la teneur en sucre du produit alimentaire dans lequel le substitut selon l'invention est incorporé est réduite d'une quantité allant jusqu'à 15%.

Les produits ayant une quantité de matière grasse diminuée jusqu'à 50% et/ou une quantité de sucre diminuée jusqu'à 15% sont réalisées avec le substitut d'œuf à base de microalgues selon l'invention comprenant au moins un arôme.

Pour réaliser ces diminutions de la concentration en sucre et en graisse, les préparations sont réalisées par l'apport d'une quantité moins importante de sucre et de graisse, et supérieure d'autres éléments comme par exemple l'eau ou la farine, le substitut d'œuf selon l'invention incorporé compensant cette réduction de sucre et de graisse dans le produit fini obtenu en termes de consistance et de propriété organoleptiques.

### DESCRIPTION DES FIGURES

[Fig. 1] La figure 1 illustre l'analyse colorimétrique comparative entre 2 préparations d'une même pâtisserie (pain au lait et donut) avec œuf ou avec le substitut selon l'invention.
[Fig. 2] La figure 2 est un diagramme décrivant la distance à référence pour l'attribution « cohésion au toucher » pour l'étude de l'Exemple 9 concernant des brioches allégées (A1) et non allégée (A2).
[Fig. 3] La figure 3 est un diagramme décrivant la distance à référence pour l'attribution « cohésion au toucher » pour l'étude de l'Exemple 10 concernant un cookie non allégé.
[Fig. 4] La Figure 4 est un diagramme décrivant les résultats de fermeté de la mie pour la brioche allégée (A1) présentée dans l'exemple 11.

### EXEMPLES

### Exemple 1 : Préparation d'un substitut d'œuf à base de microalgues selon l'invention

Un substitut d'œuf à base de microalgues est préparé grâce au procédé selon l'invention.

Sont mélangés en agitant à 500 rpm, pendant 90 secondes :
- 0,6% en poids du produit final de Gomme de Xanthane végétale ; et
- 1,2% en poids du produit final d'un mélange de poudre de carotte et de poudre de tomate, et 0,1% en poids du produit final d'arôme de vanille.

Sont ensuite mélangé au mélange obtenu ci-dessus, en agitant à 500 rpm, pendant 90 secondes :
- 12% en poids du produit final d'un produit issu de microalgues (Chlorella) ; et
- 1,8% en poids du produit final de fibres de citron ;

Sont ensuite mélangé au mélange obtenu ci-dessus, en agitant à 500 rpm, pendant 90 secondes :
- 60,3% en poids du produit final de Farine de riz et de fécule de maïs ; et
- 24 % en poids du produit final de protéines de chia ;

Est ainsi obtenu un substitut d'œuf à base de microalgue, sous forme de poudre, permettant, selon son emploi et les autres produits utilisés pour préparer le produit alimentaire, de réduire la teneur en matière grasse et en sucre du produit alimentaire dans lequel il est incorporé.

Ledit substitut d'œuf obtenu correspond à l'exemple de composition du tableau 1.

### Exemple 2 : Étude comparative colorimétrique entre 2 préparations d'une même pâtisserie (pain au lait et donut) avec œuf ou avec le substitut selon l'invention, montrant la préservation des niveaux de jaune.

Une première préparation a été réalisée avec de l'œuf, et la seconde avec le substitut selon l'invention. L'analyse statistique des données a été faite avec Statpoint pour la comparaison des moyennes.

L'analyse est réalisée sur deux différents types de pâtisseries.

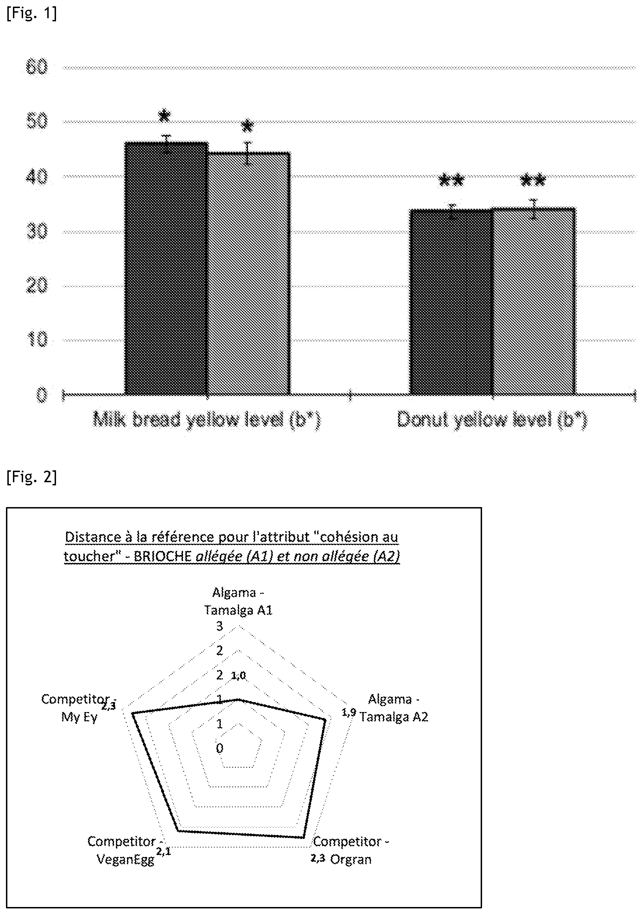

Les résultats sont présentés en Figure 1.

L'analyse colorimétrique n'a pas montré de différence statistique entre les préparations avec œufs et celles avec le substitut d'œuf selon l'invention. En effet, l'analyse de comparaison des moyennes de l'indice B (niveau de jaune du référentiel CIELAB) n'a pas permis de monter une différence statistique avec un niveau de confiance de 95%.

### Exemple 3 : Utilisation du substitut selon l'invention dans la préparation de cupcakes.

Pour la préparation de cupcakes, les ingrédients suivants sont ajoutés dans les quantités mentionnées en tableau 5 :

### Composition de préparation de cupcakes :

**[Table 5]**

| Composition (%) | |
|---|---|
| Farine | 26,8 |
| Sucre | 24,3 |
| Matières grasses végétales | 19,4 |
| Eau | 24,8 |
| Levure | 1,3 |
| Substitut d'œuf selon l'invention | 3,4 |

### Exemple 4 : Utilisation du substitut selon l'invention dans la préparation de cupcakes ayant 50% en moins de matière grasse.

Pour la préparation de cupcakes ayant un contenu en matière grasse réduit, les ingrédients suivants sont ajoutés dans les quantités mentionnées en tableau 6 :

### Composition de préparation de cupcakes :

**[Table 6]**

| Composition (%) | |
|---|---|
| Farine | 36,5 |
| Sucre | 24,3 |
| Matières grasses végétales | 9,7 |
| Eau | 24,8 |
| Levure | 1,3 |
| Substitut d'œuf selon l'invention | 3,4 |

### Exemple 5 : Utilisation du substitut selon l'invention dans la préparation de cookies.

Pour la préparation de cookies, les ingrédients suivants sont ajoutés dans les quantités mentionnées en tableau 7 :

### Composition de préparation de cookies :

**[Table 7]**

| Composition (%) | |
|---|---|
| Farine | 31,7 |
| Sucre blanc | 14,1 |
| Sucre de canne | 15,6 |
| Matières grasses végétales | 15,6 |
| Pépites de chocolat | 14,1 |
| Eau | 7,2 |
| Levure | 0,7 |
| Substitut d'œuf selon l'invention | 1 |

### Exemple 6 : Utilisation du substitut selon l'invention dans la préparation de cookies ayant 15% en moins de matière grasse et de sucre.

Pour la préparation de cookies ayant un contenu en matière grasse réduit, les ingrédients suivants sont ajoutés dans les quantités mentionnées en tableau 8 :

### Composition de préparation de cookies :

**[Table 8]**

| Composition (%) | |
|---|---|
| Farine | 35,2 |
| Sucre blanc | 12 |
| Sucre de canne | 13,2 |
| Matières grasses végétales | 13,2 |
| Pépites de chocolat | 14,1 |
| Eau | 10,6 |
| Levure | 0,7 |
| Substitut d'œuf selon l'invention | 1 |

### Exemple 7 : Préparation d'un substitut d'œuf à base de microalgues selon l'invention (avec arôme)

Un substitut d'œuf à base de microalgues est préparé grâce au procédé selon l'invention en suivant l'exemple des compositions selon les tableaux 1 et 2.

Sont mélangés en agitant à 500 rpm, pendant 90 secondes :
- l'épaississant d'origine végétale ; et
- colorant et le/les arôme(s) ;

Sont ensuite mélangé au mélange obtenu ci-dessus, en agitant à 500 rpm, pendant 90 secondes :
- le produit issu de microalgues ; et
- la fibre végétale non-microalgale ;

Sont ensuite mélangé au mélange obtenu ci-dessus, en agitant à 500 rpm, pendant 90 secondes :
- les farine végétale non-microalgale et/ou fécule végétale non-microalgale ; et
- la protéine végétale non-microalgale ;

Est ainsi obtenu un substitut d'œuf à base de microalgue, sous forme de poudre, permettant, selon son emploi et les autres produits utilisés pour préparer le produit alimentaire, de substituer l'oeuf, et qui peut réduire la teneur en matière grasse et en sucre du produit alimentaire dans lequel il est incorporé.

### Exemple 8 : Préparation d'un substitut d'œuf à base de microalgues selon l'invention (sans arôme)

Un substitut d'œuf à base de microalgues est préparé grâce au procédé selon l'invention en suivant l'exemple des compositions selon les tableaux 3 et 4.

Sont mélangés en agitant à 500 rpm, pendant 90 secondes :
- l' épaississant d'origine végétale ; et
- le colorant ;

Sont ensuite mélangé au mélange obtenu ci-dessus, en agitant à 500 rpm, pendant 90 secondes :
- le produit issu de microalgues ; et
- la fibre végétale non-microalgale ;

Sont ensuite mélangé au mélange obtenu ci-dessus, en agitant à 500 rpm, pendant 90 secondes :
- les farine végétale non-microalgale et/ou fécule végétale non-microalgale ; et
- la protéine végétale non-microalgale ;

Est ainsi obtenu un substitut d'œuf à base de microalgue, sous forme de poudre, permettant, selon son emploi et les autres produits utilisés pour préparer le produit alimentaire, de substituer l'œuf.

### Exemple 9 : Évaluation de l'écart de perception de cohésion au toucher entre des brioches fabriqués à partir d'œuf et des brioches et cookies fabriqués à partir du substitut d'œuf préparé selon l'invention ou à partir de substituts d'œuf concurrents.

Le procédé selon l'invention est utilisé pour produire un substitut d'œuf pour recettes selon l'Exemple 8.

La capacité du substitut d'œuf préparé selon l'invention à apporter du liant au sein de deux matrices céréalières, brioches et cookies, est testée et comparée à la capacité des substituts d'œuf concurrents.

Une solution de 12,05% (w/v) d'œuf et de chaque substitut d'œuf est préparée dans de l'eau à 20°C et mélangée à 1000 rpm pendant 3 minutes. Les échantillons testés lors de ce test sont présentés dans le Tableau 9.

**[Table 9]**

| **Substituts d'œufs testés dans l'exemple 9** | **Concentration de la solution** |
|---|---|
| Poudre d'œuf entier Gallia | |
| Substitut d'œuf préparé selon l'Exemple 8 | |
| Concurrent 1 : Volley de MyEY | 12,05% (w/v) |
| Concurrent 2: VeganEGG de Follow your Heart | |
| Concurrent 3: No EGG de Orgran | |

Les produits céréaliers d'application choisis pour le test sont des brioches et des cookies de recettes traditionnelles et donc non allégés.

La formule, l'ordre d'incorporation des ingrédients et les paramètres des phases de mélange (vitesse, durée) utilisés pour fabriquer la matrice de brioche sont présentés dans le Tableau 10.

Les formules sont réalisées à l'aide d'un batteur planétaire (par exemple un modèle 5KSM150 du fabricant Kitchen Aid, USA) équipé de l'outil crochet pour la brioche.

Des batch de 1,3 kg sont réalisés pour les brioches.

**[Table 10]**

| **Formule, ordre d'incorporation des ingrédients et paramètres de mélange de la brioche *non allégée*** | | |
|---|---|---|
| **Ingrédient** | **Quantité (%)** | **Ordre d'incorporation, Phase et paramètres de mélange (vitesse, durée)** |
| Lait végétal | 18,4 | 1 : ; Diluer le tout au fouet 30sc |
| Levure instantanée | 1,5 | |
| Sucre | 7,3 | 2; Mélanger au fouet 1 min |
| Oeuf ou poudre / substitut d'oeuf en poudre en solution selon le Tableau 9 | 17 | |
| Margarine | 11 | 3; Robot pâtissier type batteur: Vitesse 2 - 6min |
| Sel | 0,7 | |
| Farine | 44,1 | |

Lorsque la pâte est homogène, couvrir et laisser pousser 30min à 30°C.

### Dégazer la pâte.

Mettre la pâte dans un moule.

Appliquer du lait végétal au pinceau sur le dessus de la pâte.

Couvrir et laisser pousser 30min à 35°C.

Cuire au four à 180°C pendant 30 minutes.

Laisser refroidir le produit pendant 90min à 20°C.

Une fois refroidies, les brioches sont placées dans des sachets congélation zippés puis stockés jusqu'à réalisation des mesures sensorielles ayant lieu dans un intervalle de 6 heures maximum.

La formule, l'ordre d'incorporation des ingrédients et les paramètres des phases de mélange (vitesse, durée) utilisés pour fabriquer la matrice de cookie sont présentés dans le Tableau 11.

Les formules sont réalisées à l'aide d'un batteur planétaire (par exemple un modèle 5KSM150 du fabricant Kitchen Aid, USA) équipé de l'outil feuille pour le cookie.

Des batch de 1 kg sont réalisés pour les cookies.

**[Table 11]**

| **Formule, ordre d'incorporation des ingrédients et paramètres de mélange du cookie *non allégé*** | | |
|---|---|---|
| **Ingrédient** | **Quantité (%)** | **Ordre d'incorporation et paramètres de mélange (vitesse, durée)** |
| Sucre blanc | 14,1 | 1; Robot pâtissier type batteur :Vitesse 0,5 : 1 min |
| Sucre roux | 15,6 | |
| Margarine | 15,6 | |
| Oeuf ou poudre/ substitut d'oeuf en poudre en solution selon le Tableau 9 | 8,2 | 2; Robot pâtissier type batteur :Vitesse 1 : 1 min |
| Farine | 31,7 | 3; Robot pâtissier type batteur:Vitesse 1 : 1 min |
| Levure Chimique | 0,7 | |
| Pépites de chocolat | 14,1 | 4; Robot pâtissier type batteur:Vitesse 0,5 : 0,5 min |

Former de petites boules sur une plaque de cuisson puis aplatir légèrement.
Cuire au four 25 minutes à 150°C.
Laisser refroidir de 60min à 20°C.

Une fois refroidis, les cookies sont placés dans des sachets congélation zippés puis stockés jusqu'à réalisation des mesures sensorielles ayant lieu dans un intervalle de 6 heures maximum.

Cinq batch de chaque type de produit céréalier sont réalisés, en utilisant à chaque fois une des cinq solutions d'œuf ou de substitut d'œuf présentées dans le Tableau 9.

La capacité des substituts d'œuf à apporter du liant au sein des brioches et cookies, est évaluée par une mesure sensorielle de la cohésion au toucher.

La mesure sensorielle est réalisée à l'aide d'un panel naïf de 10 consommateurs sous la forme d'un test dit de « distance à la référence » (norme NF ISO 13299:2016).

Le test « distance à la référence » consiste à quantifier l'écart de chaque produit évalué pour un attribut défini, ici la « cohésion au toucher », par rapport à une référence définie, ici les produits réalisés à partir de poudre d'œuf entier.

Les panelistes évaluent l'écart perçu de cohésion au toucher sur une échelle linéaire discontinue de 0 à 10, la borne 0 correspondant à une similitude complète de « cohésion au toucher » entre le produit fait à partir d'un substitut d'œuf et la référence correspondant au produit fait à partir d'œuf, et la borne 10 correspondant à une dissimilitude complète entre ces produits.

Il est demandé aux panelistes d'évaluer la « cohésion au toucher » selon la définition et le protocole suivants :
- Définition pour la brioche : degré auquel la mie tient/ne se désintègre pas facilement en particules lorsqu'on le frotte entre le pouce et le doigt, ou entre deux mains.
- Protocole d'analyse pour la brioche : Casser en deux la tranche et sur une demi-tranche, évaluer la tenue de la mie en la frottant entre le pouce et le doigt ou entre deux mains. Le produit est cohésif s'il ne se forme pas de miettes.
- Définition pour le cookie : degré auquel le gâteau tient/ne se désintègre pas facilement en particules lorsqu'on le casse.
- Protocole d'analyse pour le cookie : Casser en deux le cookie, évaluer la tenue du gâteau en observant la quantité de miettes issues de la cassure. Le produit est cohésif s'il ne se forme pas de miettes.

Il est demandé aux panelistes de commencer par évaluer le produit référence, c'est-à-dire la brioche ou le cookie réalisé à partir de poudre d'œuf entier. Ensuite, chaque paneliste évalue chacun des quatre produits fabriqués à partir de substitut d'œuf, dans un ordre aléatoire.

Tous les échantillons testés par les panelistes sont rendus anonymes grâce à un code à 3 chiffres de sorte que les panelistes ne sachent pas à quoi ils ne correspondent ni ce qui les distingue en termes de fabrication.

Une fois les résultats des tests rendus par les panelistes, la distance entre la référence (borne 0 de l'échelle) et l'emplacement pour chaque produit sur l'échelle linéaire par chaque paneliste est mesurée et enregistrée informatiquement pour traitement statistique.

Une analyse de variances sur l'ensemble des valeurs de distance à la référence pour la « cohésion au toucher » est réalisée de façon à étudier l'influence du type de substitut d'œuf et du changement de paneliste sur l'écart perçu de « cohésion au toucher » avec la référence.

Les résultats de différence à la référence pour l'attribut « cohésion au toucher » pour la brioche non allégée présentée dans cet exemple sont présentés en Figure 2 sous la dénomination « A2 ». Ces résultats sont exprimés en valeur moyenne pour l'ensemble des panelistes, sur une échelle variant de 0 à 10 conformément à l'échelle linéaire discontinue utilisée lors du test.

Sur la Figure 2, la référence correspondant à la cohésion au toucher d'une brioche non allégée réalisée à partir de poudre d'œuf entier est représentée par le cercle de valeur 0.

Sur l'ensemble des données, l'analyse des variances a mis en évidence un effet significatif du type de substitut d'œuf sur la perception de « cohésion au toucher » sans effet du changement de paneliste, avec un niveau de confiance de 5%.

Selon ces résultats, la brioche réalisée à partir du substitut d'œuf préparé selon l'Exemple 8 (A2) obtient une note moyenne de distance à la référence de 1,9, correspondant à la seconde note la plus proche de la référence après la brioche réalisée à partir du substitut d'œuf préparé selon l'Exemple 7 (A1).

Les conditions de procédé selon l'Exemple 8 permettent donc d'obtenir une brioche non allégée présentant une perception par les panelistes de « cohésion au toucher » plus proche de la référence œuf entier que les brioches réalisées avec les substituts d'œuf concurrent.

Ce résultat témoigne d'une meilleure capacité du substitut préparé selon l'invention à apporter du liant au sein d'une matrice de brioche non allégée par rapport aux substituts d'œuf concurrents.

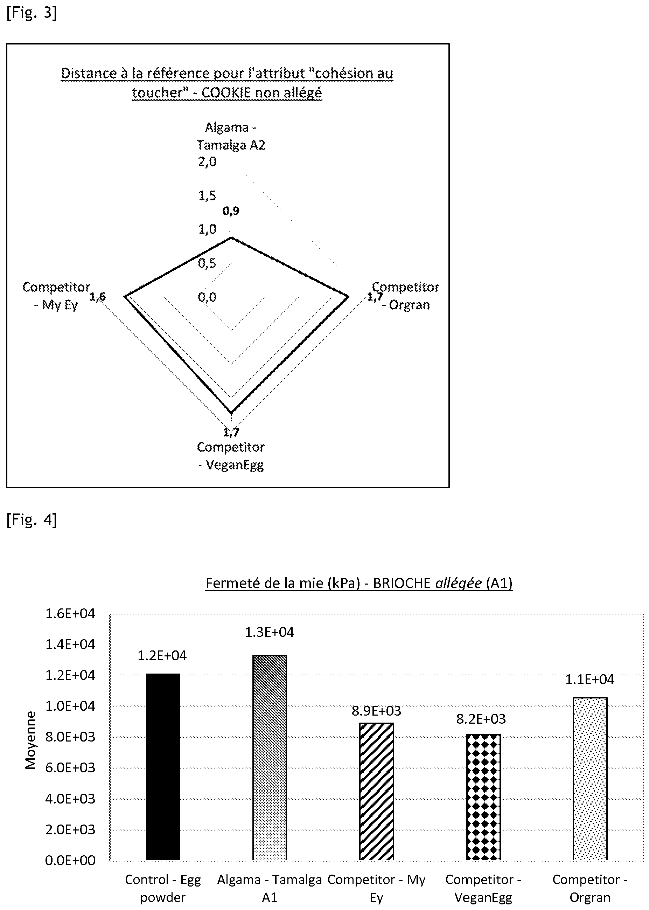

Les résultats de différence à la référence pour l'attribut « cohésion au toucher » pour le cookie non allégé présenté dans cet exemple sont présentés en Figure 3. Ces résultats sont exprimés en valeur moyenne pour l'ensemble des panelistes, sur une échelle variant de 0 à 10 conformément à l'échelle linéaire discontinue utilisée lors du test.

Sur la Figure 3, la référence correspondant à la cohésion au toucher d'un cookie non allégé réalisé à partir de poudre d'œuf entier est représentée par le cercle de valeur 0.

Sur l'ensemble des données, l'analyse des variances a mis en évidence un effet significatif du type de substitut d'œuf sur la perception de « cohésion au toucher » sans effet du changement de paneliste, avec un niveau de confiance de 5%.

Selon ces résultats, le cookie réalisé à partir du substitut d'œuf préparé selon l'Exemple 8 (A2) obtient une note moyenne de distance à la référence de 0,9, correspondant à la note la plus proche de la référence.

Les conditions de procédé selon l'Exemple 8 permettent donc d'obtenir un cookie non allégé présentant une perception par les panelistes de « cohésion au toucher » plus proche de la référence œuf entier que les brioches réalisées avec les substituts d'œuf concurrent.

Ce résultat témoigne d'une meilleure capacité du substitut préparé selon l'invention à apporter du liant au sein d'une matrice de cookie non allégé par rapport aux substituts d'œuf concurrents.

### Exemple 10 : Évaluation de l'écart de perception de cohésion au toucher entre des brioches allégées en gras fabriquées à partir d'œuf et des brioches allégées en gras fabriquées à partir du substitut d'œuf préparé selon l'invention ou à partir de substituts d'œuf concurrents.

Le procédé selon l'invention est utilisé pour produire un substitut d'œuf pour recettes allégées selon l'Exemple 7.

La capacité du substitut d'œuf préparé selon l'invention à apporter du liant au sein de de matrices de brioches allégées en gras est testée et comparée à la capacité des substituts d'œuf concurrents.

Une solution de 12,05% (w/v) d'œuf et de chaque substitut d'œuf est préparée dans de l'eau à 20°C et mélangée à 1000 rpm pendant 3 minutes. Les échantillons testés lors de ce test sont présentés dans le Tableau 9.

Les produits céréaliers d'application choisis pour le test sont des brioches allégées en gras de 30%.

La formule, l'ordre d'incorporation des ingrédients et les paramètres des phases de mélange (vitesse, durée) utilisés pour fabriquer la matrice de brioche sont présentés dans le Tableau 12.

Les formules sont réalisées à l'aide d'un batteur planétaire (par exemple un modèle 5KSM150 du fabricant Kitchen Aid, USA) équipé de l'outil crochet pour la brioche.

Des batch de 1,3 kg sont réalisés pour les brioches.

**[Table 12]**

| **Formule, ordre d'incorporation des ingrédients et paramètres de mélange de la brioche *allégée en gras de 30%*** | | |
|---|---|---|
| **Ingrédient** | **Quantité (%)** | **Ordre d'incorporation et paramètres de mélange (vitesse, durée)** |
| Lait végétal | 19,1 | 1; Diluer le tout au fouet 30sc |
| Levure instantanée | 1,5 | |
| Sucre | 7,6 | 2; Mélanger au fouet 1 min |
| Oeuf ou poudre / substitut d'oeuf en poudre en solution selon le Tableau 9 | 17,7 | |
| Margarine | 7,6 | 3; Robot pâtissier type batteur: |
| Sel | 0,8 | Vitesse 2 - 6min |
| Farine | 45,7 | |

Lorsque la pâte est homogène, couvrir et laisser pousser 30min à 30°C

### Dégazer la pâte

Placer la pâte dans un moule.
Appliquer du lait végétal au pinceau sur le dessus de la pâte.
Couvrir et laisser pousser 30min à 35°C.
Cuire au four à 180°C pendant 30 minutes.
Laisser refroidir pendant 90min à 20°C.

Une fois refroidies, les brioches sont placées dans des sachets congélation zippés puis stockés jusqu'à réalisation des mesures sensorielles ayant lieu dans un intervalle de 6 heures maximum.

Cinq batch de chaque type de produit céréalier sont réalisés, en utilisant à chaque fois une des cinq solutions d'œuf ou de substitut d'œuf présentées dans le Tableau 9.

La capacité des substituts d'œuf à apporter du liant au sein des brioches est évaluée par une mesure sensorielle de la cohésion au toucher.

La mesure sensorielle est réalisée à l'aide d'un panel naïf de 10 consommateurs sous la forme d'un test dit de « distance à la référence » (norme NF ISO 13299:2016).

Le test « distance à la référence » consiste à quantifier l'écart de chaque produit évalué pour un attribut défini, ici la « cohésion au toucher », par rapport à une référence définie, ici les produits réalisés à partir de poudre d'œuf entier.

Les panelistes évaluent l'écart perçu de cohésion au toucher sur une échelle linéaire discontinue de 0 à 10, la borne 0 correspondant à une similitude complète de « cohésion au toucher » entre le produit fait à partir d'un substitut d'œuf et la référence correspondant au produit fait à partir d'œuf, et la borne 10 correspondant à une dissimilitude complète entre ces produits.

Il est demandé aux panelistes d'évaluer la « cohésion au toucher » selon la définition et le protocole suivants :
- Définition : degré auquel la mie tient/ne se désintègre pas facilement en particules lorsqu'on le frotte entre le pouce et le doigt, ou entre deux mains.
- Protocole d'analyse : Casser en deux la tranche et sur une demi-tranche, évaluer la tenue de la mie en la frottant entre le pouce et le doigt ou entre deux mains. Le produit est cohésif s'il ne se forme pas de miettes.

Il est demandé aux panelistes de commencer par évaluer le produit référence, c'est-à-dire la brioche réalisée à partir de poudre d'œuf entier. Ensuite, chaque paneliste évalue chacun des quatre produits fabriqués à partir de substitut d'œuf, dans un ordre aléatoire.

Tous les échantillons testés par les panelistes sont rendus anonymes grâce à un code à 3 chiffres de sorte que les panelistes ne sachent pas à quoi ils ne correspondent ni ce qui les distingue en termes de fabrication.

Une fois les résultats des tests rendus par les panelistes, la distance entre la référence (borne 0 de l'échelle) et l'emplacement pour chaque produit sur l'échelle linéaire par chaque paneliste est mesurée et enregistrée informatiquement pour traitement statistique.

Une analyse de variances sur l'ensemble des valeurs de distance à la référence pour la « cohésion au toucher » est réalisée de façon à étudier l'influence du type de substitut d'œuf et du changement de paneliste sur l'écart perçu de « cohésion au toucher » avec la référence.

Les résultats de différence à la référence pour l'attribut « cohésion au toucher » pour la brioche allégée présentée dans cet exemple sont présentés en Figure 2 sous la dénomination « A1 ». Ces résultats sont exprimés en valeur moyenne pour l'ensemble des panelistes, sur une échelle variant de 0 à 10 conformément à l'échelle linéaire discontinue utilisée lors du test.

Sur la Figure 2, la référence correspondant à la cohésion au toucher d'une brioche allégée réalisée à partir de poudre d'œuf entier est représentée par le cercle de valeur 0.

Sur l'ensemble des données, l'analyse des variances a mis en évidence un effet significatif du type de substitut d'œuf sur la perception de « cohésion au toucher » sans effet du changement de paneliste, avec un niveau de confiance de 5%.

Selon ces résultats, la brioche réalisée à partir du substitut d'œuf préparé selon l'Exemple 7 (A1) obtient une note moyenne de distance à la référence de 1,0, correspondant à la note la plus proche de la référence.

Les conditions de procédé selon l'Exemple 7 permettent donc d'obtenir une brioche allégée présentant une perception par les panelistes de « cohésion au toucher » plus proche de la référence œuf entier que les brioches réalisées avec les substituts d'œuf concurrent.

Ce résultat témoigne d'une meilleure capacité du substitut préparé selon l'invention à apporter du liant au sein d'une matrice de brioche allégée par rapport aux substituts d'œuf concurrents.

### Exemple 11 : Comparaison du moelleux évalué de façon instrumentale entre des brioches allégées en gras fabriquées à partir d'œuf et des brioches allégées en gras fabriquées à partir du substitut d'œuf préparé selon l'invention ou à partir de substituts d'œuf concurrents.

Le procédé selon l'invention est utilisé pour produire un substitut d'œuf pour recettes allégées selon l'Exemple 7.

La capacité du substitut d'œuf préparé selon l'invention à apporter du moelleux au sein de de matrices de brioches allégées en gras de 30% est testée et comparée à la capacité des substituts d'œuf concurrents.

La capacité des substituts d'œuf à apporter du moelleux au sein des brioches et cookies, est évaluée par une mesure instrumentale de la fermeté de la mie interne de la brioche.

La mesure instrumentale est réalisée à l'aide d'un texturomètre TAHD+ (Stable Micro Systems, Surrey, UK) équipé avec une cellule de force de 50kg.

Juste après déballage de la brioche, des pavés de mie interne de dimension standardisée (6 cm x 3 cm x 3 cm) sont découpés à l'aide d'un système de découpe.

Deux pavés sont prélevés par brioche correspondant à deux répétitions intra produit.

Deux brioches par batch de fabrication sont utilisées pour le test, correspondant à deux répétitions intra batch.

Le test utilisé est un test de compression avec un plateau aluminium de 10 cm de diamètre. La vitesse pre-test est de 1 mm/s, la vitesse test de 2 mm/s et la vitesse post-test de 10 mm/s. Le seuil de force est de 0,5N. Le taux de compression cible est de 40%.

Les courbes de valeurs obtenues exprimées en force (N) en fonction de la distance (mm) sont traitées de façon à extraire la pente à l'origine (N/mm). Cette valeur est traitée de façon à obtenir le module de Young ou module d'élasticité (kPa) de la mie.

Le module de Young représente la rigidité de la mie de la brioche, c'est-à-dire de son moelleux.

Une analyse de variances sur l'ensemble des valeurs de modules de Young est réalisée de façon à étudier l'influence du type de substitut d'œuf et de la répétabilité intra batch sur la rigidité de la mie.

Les résultats de fermeté de la mie pour la brioche allégée présentée dans cet exemple sont présentés en Figure 4 sous la dénomination « A1 ».

Sur l'ensemble des données, l'analyse des variances a mis en évidence un effet significatif du type de substitut d'œuf sur la perception de « cohésion au toucher » sans effet de la répétabilité intra batch, avec un niveau de confiance de 5%.

Selon ces résultats, la brioche réalisée à partir du substitut d'œuf préparé selon l'Exemple 7 (A1) présente la fermeté de mie la plus proche de celle de la référence œuf entier.

En cela, la brioche réalisée à partir du substitut d'œuf préparé selon l'Exemple 7 (A1) se démarque des concurrents « My Ey », « Vegan Egg » et « Orgran » qui présentent des fermetés de mie inférieures à celle de la référence œuf entier.

Les conditions de procédé selon l'Exemple 7 permettent donc d'obtenir une brioche allégée présentant un moelleux mesuré de façon instrumentale plus proche de la référence œuf entier que les brioches réalisées avec les substituts d'œuf concurrent.

Ce résultat témoigne d'une meilleure capacité du substitut préparé selon l'invention à apporter du moelleux au sein d'une matrice de brioche allégée par rapport aux substituts d'œuf concurrents.

## Revendications

1. Substitut d'œuf à base de microalgue, sous forme de poudre, **caractérisé en ce qu'**il comprend :
- de 40% à 90%, de préférence de 40% à 80%, de manière encore plus préférée de 50% à 75%, en poids total dudit substitut d'au moins une farine végétale non-microalgale et/ou d'au moins une fécule végétale non-microalgale, lesdites farines et fécules étant choisies parmi : farine de riz, farine de maïs, farine de tapioca, farine de lentilles, farine de quinoa, farine de millet, farine de sarrasin, fécule de maïs, fécule de pomme de terre, fécule de riz, fécule de tapioca ;
- de 8 à 30%, de préférence de 10% à 30%, de manière encore plus préférée de 12% à 24%, en poids total dudit substitut d'au moins une protéine végétale non-microalgale, choisi parmi : aquafaba déshydraté, protéines de chia, protéines de pois, protéines de fèves, protéines de lin, protéines de haricots mungo, protéines de pois chiche, protéines de petits pois, protéines de pomme de terre;
- de 1% à 15%, de préférence de 3% à 15%, de manière encore plus préférée de 5% à 12%, en poids total dudit substitut d'au moins un produit issu de microalgues provenant de Chlorella ou Arthrospira, ledit au moins un produit issu de microalgues étant choisi parmi : farine de microalgues, protéines issues de microalgues, lipides issus de microalgues, extraits de microalgues ;
- de 0,2% à 10%, de préférence de 0,2% à 5%, en poids total dudit substitut d'au moins une fibre végétale non-microalgale choisie parmi : fibres d'avoine, fibres de blé, fibres de pommes, fibres d'agrumes, fibres de citron, fibres de psyllium ;
- de 0,1% à 2% en poids total dudit substitut d'au moins un agent épaississant d'origine végétale choisi parmi : gomme guar, gomme xanthane, gomme gellan, gomme de caroube, gomme arabique, gomme tara, alginate, agar agar, carraghénanes, et ses dérivés.

2. Substitut d'œuf à base de microalgue selon la revendication précédente, **caractérisé en ce que** qu'il comprend de 0,1% à 16% en poids total dudit substitut d'au moins un colorant.

3. Substitut d'œuf à base de microalgue selon la revendication précédente, **caractérisé en ce que** ledit colorant est choisi parmi : curcuma, curcumine, beta-carotène, poudre de tomate, poudre de carotte.

4. Substitut d'œuf à base de microalgue selon l'une quelconque des revendications précédentes, **caractérisé en ce qu'**il comprend de 0,1 % à 16% en poids total dudit substitut d'au moins un arôme.

5. Procédé d'obtention d'un substitut d'œuf à base de microalgue selon l'une quelconque des revendications précédentes, comprenant au moins une étape de mélange des composés, de préférence à entre 100 et 3000 rpm, de manière encore plus préférée à entre 100 à 1000 rpm, de manière encore plus préférée à 500 rpm, de préférence pendant entre 60 et 350 secondes, de manière encore plus préférée entre 60 et 120 secondes, de manière encore plus préférée 90 secondes.

6. Procédé d'obtention d'un substitut d'œuf à base de microalgue selon la revendication précédente, comprenant les étapes de :
a. Mélanger en agitant à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
- Ledit au moins un épaississant d'origine végétale ; et
- Optionnellement ledit au moins un colorant et/ou ledit au moins un arôme ;
b. Ajouter au mélange obtenu à l'étape a., en agitant à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
- Ledit au moins un produit issu de microalgues ; et
- Ladite au moins une fibre végétale non-microalgale ;
c. Ajouter au mélange obtenu à l'étape b., à entre 100 et 3000 rpm, de manière préférée à entre 100 et 1000 rpm, de manière encore plus préférée 500 rpm, pendant entre 60 et 350 secondes, de préférence entre 60 et 120 secondes, de manière encore plus préférée 90 secondes :
- Ladite au moins une farine végétale non-microalgale et/ou fécule végétale non-microalgale ; et
- Ledit au moins une protéine végétale non-microalgale.

7. Procédé d'obtention d'un substitut d'œuf à base de microalgue sous forme liquide comprenant les étapes selon la revendication précédente, et comprenant en outre une étape d. de mélange du substitut d'œuf sous forme de poudre obtenu à l'étape c. avec de l'eau, de préférence à un rapport d'une part de poudre obtenue à l'étape c. pour de 6 à 9 parts d'eau, à entre 100 à 5000 rpm, de préférence entre 500 et 2000, de manière encore plus préférée 800 rpm, pendant de 3 à 7 minutes.

8. Utilisation du substitut d'œuf selon les revendications 1 à 4 dans la préparation d'un produit alimentaire, de préférence dans la préparation de génoise, de base pour dessert, de pâte à dessert, de pâtisserie, de viennoiserie, de produit de boulangerie, ou de biscuits.

9. Procédé d'incorporation du substitut d'œuf à base de microalgue selon les revendications 1 à 4, dans un produit alimentaire, comprenant l'incorporation dans la préparation du produit alimentaire d'entre 0,5 et 5% du poids total du produit alimentaire du substitut d'œuf à base de microalgue selon l'invention.

10. Produit alimentaire comprenant entre 0,5 et 5% en poids dudit produit alimentaire du substitut d'œuf à base de microalgue selon l'une quelconque des revendications 1 à 4.

## Patentansprüche

1. Mikroalgenbasierter Ersatz für Eier in Pulverform,
**dadurch gekennzeichnet, dass** er umfasst:
- von 40 Gew.-% bis 90 Gew.-%, vorzugsweise von 40 Gew.-% bis 80 Gew.-%, noch mehr bevorzugt von 50 Gew.-% bis 75 Gew.-% des Ersatzes mindestens ein Nicht-Mikroalgen-Pflanzenmehl und/oder mindestens eine Nicht-Mikroalgen-Pflanzenstärke, wobei die Mehle und Stärken ausgewählt sind aus: Reismehl, Maismehl, Tapiokamehl, Linsenmehl, Quinoamehl, Hirsemehl, Buchweizenmehl, Maisstärke, Kartoffelstärke, Reisstärke, Tapiokastärke;
- von 8 bis 30 Gew.-%, vorzugsweise von 10 Gew.-% bis 30 Gew.-%, noch mehr bevorzugt von 12 Gew.-% bis 24 Gew.-% des Ersatzes mindestens ein Nicht-Mikroalgen-Pflanzenprotein, ausgewählt aus: dehydriertem Aquafaba, Chiaproteinen, Erbsenproteinen, Saubohnenproteinen, Leinproteinen, Mungobohnenproteinen, Kichererbsenproteinen, Erbsenproteinen, Kartoffelproteinen;
- von 1 Gew.-% bis 15 Gew.-%, vorzugsweise von 3 Gew.-% bis 15 Gew.-%, noch mehr bevorzugt von 5 Gew.-% bis 12 Gew.-% des Ersatzes mindestens ein aus Mikroalgen gewonnenes Produkt, das aus Chlorella oder Arthrospira stammt, wobei das mindestens eine aus Mikroalgen gewonnene Produkt ausgewählt ist aus: Mikroalgenmehl, aus Mikroalgen gewonnenen Proteinen, aus Mikroalgen gewonnenen Lipiden, Mikroalgenextrakten;
- von 0,2 Gew.-% bis 10 Gew.-%, vorzugsweise von 0,2 Gew.-% bis 5 Gew.-% des Ersatzes mindestens eine Nicht-Mikroalgen-Pflanzenfaser, ausgewählt aus: Haferfasern, Weizenfasern, Apfelfasern, Zitrusfasern, Zitronenfasern, Psylliumfasern;
- von 0,1 bis 2 Gew.-% des Ersatzes mindestens ein Verdickungsmittel pflanzlichen Ursprungs, ausgewählt aus: Guargummi, Xanthangummi, Gellangummi, Johannisbrotkernmehl, Gummi arabicum, Taragummi, Alginat, Agar-Agar, Carrageenanen und deren Derivaten.

2. Mikroalgenbasierter Ersatz für Eier nach dem vorstehenden Anspruch, **dadurch gekennzeichnet, dass** er von 0,1 Gew.-% bis 16 Gew.-% des Ersatzes mindestens einen Farbstoff umfasst.

3. Mikroalgenbasierter Ersatz für Eier nach dem vorstehenden Anspruch, **dadurch gekennzeichnet, dass** der Farbstoff ausgewählt ist aus: Kurkuma, Curcumin, Beta-Carotin, Tomatenpulver, Karottenpulver.

4. Mikroalgenbasierter Ersatz für Eier nach einem der vorstehenden Ansprüche, **dadurch gekennzeichnet, dass** er von 0,1 bis 16 Gew.-% des Ersatzes mindestens ein Aroma umfasst.

5. Verfahren zum Erhalten eines mikroalgenbasierten Ersatzes für Eier nach einem der vorstehenden Ansprüche, umfassend mindestens einen Schritt des Mischens der Verbindungen, vorzugsweise bei zwischen 100 und 3000 U/min, noch mehr bevorzugt bei zwischen 100 und 1000 U/min, noch mehr bevorzugt bei 500 U/min, vorzugsweise für zwischen 60 und 350 Sekunden, noch mehr bevorzugt zwischen 60 und 120 Sekunden, noch mehr bevorzugt 90 Sekunden.

6. Verfahren zum Erhalten eines mikroalgenbasierten Ersatzes für Eier nach dem vorstehenden Anspruch, umfassend die Schritte:
a. Mischen unter Rühren bei zwischen 100 und 3000 U/min, bevorzugt bei zwischen 100 und 1000 U/min, noch mehr bevorzugt bei 500 U/min, für zwischen 60 und 350 Sekunden, vorzugsweise zwischen 60 und 120 Sekunden, noch mehr bevorzugt 90 Sekunden:
- das mindestens eine Verdickungsmittel pflanzlichen Ursprungs; und
- optional den mindestens einen Farbstoff und/oder das mindestens eine Aroma;
b. Zugeben zu der Mischung, die in Schritt a. erhalten wird, unter Rühren bei zwischen 100 und 3000 U/min, bevorzugt bei zwischen 100 und 1000 U/min, noch mehr bevorzugt 500 U/min, für zwischen 60 und 350 Sekunden, vorzugsweise zwischen 60 und 120 Sekunden, noch mehr bevorzugt 90 Sekunden:
- das mindestens eine aus Mikroalgen gewonnene Produkt; und
- die mindestens eine Nicht-Mikroalgen-Pflanzenfaser;
c. Zugeben zu der Mischung, die in Schritt b. erhalten wird bei zwischen 100 und 3000 U/min, bevorzugt bei zwischen 100 und 1000 U/min, noch mehr bevorzugt bei 500 U/min, für zwischen 60 und 350 Sekunden, vorzugsweise zwischen 60 und 120 Sekunden, noch mehr bevorzugt 90 Sekunden:
- das/die mindestens eine Nicht-Mikroalgen-Pflanzenmehl und/oder Nicht-Mikroalgen-Pflanzenstärke; und
- das mindestens eine Nicht-Mikroalgen-Pflanzenprotein.

7. Verfahren zum Erhalten eines mikroalgenbasierten Ersatzes für Eier in flüssiger Form, umfassend die Schritte nach dem vorstehenden Anspruch, und ferner umfassend einen Schritt d. des Mischens des in Schritt c. erhaltenen Ersatzes für Eier in Pulverform mit Wasser, vorzugsweise in einem Verhältnis von einerseits in Schritt c. erhaltenem Pulver zu 6 bis 9 Teilen Wasser, bei zwischen 100 und 5000 U/min, vorzugsweise zwischen 500 und 2000, noch mehr bevorzugt bei 800 U/min, für 3 bis 7 Minuten.

8. Verwendung des Ersatzes für Eier nach den Ansprüchen 1 bis 4 bei der Herstellung eines Lebensmittelprodukts, vorzugsweise bei der Herstellung von Biskuit, Dessertgrundlage, Dessertteig, Konditoreiwaren, Feinbackwaren, Backwaren oder Keksen.

9. Verfahren zum Einarbeiten des mikroalgenbasierten Ersatzes für Eier nach den Ansprüchen 1 bis 4 in ein Lebensmittelprodukt, umfassend die Einarbeitung bei der Herstellung des Lebensmittelprodukts von zwischen 0,5 und 5 Gew.-% des Lebensmittelprodukts des mikroalgenbasierten Ersatzes für Eier gemäß der Erfindung.

10. Lebensmittelprodukt, umfassend zwischen 0,5 und 5 Gew.-% des Lebensmittelprodukts den mikroalgenbasierten Ersatz für Eier nach einem der Ansprüche 1 bis 4.

## Claims

1. A microalgae-based egg substitute, in powder form, **characterized by** comprising:
- 40% to 90%, preferably 40% to 80%, more preferably 50% to 75%, by total weight of said substitute, of at least one non-microalgal vegetable flour and/or at least one non-microalgal vegetable starch, said flours and starches being selected from: rice flour, corn flour, tapioca flour, lentil flour, quinoa flour, millet flour, buckwheat flour, corn starch, potato starch, rice starch, tapioca starch;
- 8% to 30%, preferably 10% to 30%, more preferably 12% to 24%, by total weight of said substitute, of at least one non-microalgal vegetable protein, selected from: dehydrated aquafaba, chia protein, pea protein, fava bean protein, flax protein, mung bean protein, chickpea protein, pea protein, potato protein;
- 1% to 15%, preferably 3% to 15%, more preferably 5% to 12%, by total weight of said substitute, of at least one product from microalgae coming from Chlorella or Arthrospira, said at least one microalgae-derived product being selected from: microalgae flour, protein from microalgae, lipids from microalgae, extracts from microalgae;
- 0.2% to 10%, preferably 0.2% to 5%, by total weight of said substitute, of at least one non-microalgal vegetable fiber selected from: oat fiber, wheat fiber, apple fiber, citrus fiber, lemon fiber, psyllium fiber;
- 0.1% to 2%, by total weight of said substitute, of at least one thickener of vegetable origin selected from: guar gum, xanthan gum, gellan gum, locust bean gum, gum arabic, tara gum, alginate, agar, carrageenans and derivatives thereof.

2. The microalgae-based egg substitute according to the preceding claim, **characterized by** comprising 0.1% to 16%, by total weight of said substitute, of at least one dye.

3. The microalgae-based egg substitute according to the preceding claim, **characterized in that** said dye is selected from: turmeric, curcumin, beta-carotene, tomato powder, carrot powder.

4. The microalgae-based egg substitute according to any of the preceding claims, **characterized by** comprising 0.1% to 16%, by total weight of said substitute, of at least one flavoring.

5. A method for obtaining a microalgae-based egg substitute according to any of the preceding claims, comprising at least one step for mixing the components, preferably at between 100 and 3,000 rpm, preferably at between 100 and 1,000 rpm, more preferably at 500 rpm, preferably for between 60 and 350 seconds, more preferably for between 60 and 120 seconds, even more preferably for 90 seconds.

6. The method for obtaining a microalgae-based egg substitute according to the preceding claim, comprising the steps of:
a. mixing, while stirring at between 100 and 3,000 rpm, preferably at between 100 and 1,000 rpm, more preferably at 500 rpm, for between 60 and 350 seconds, preferably for between 60 and 120 seconds, more preferably for 90 seconds:
- said at least one thickener of vegetable origin; and
- optionally said at least one dye and/or said at least one flavoring;
b. adding, to the mixture obtained in step a., while stirring at between 100 and 3,000 rpm, preferably at between 100 and 1,000 rpm, more preferably at 500 rpm, for between 60 and 350 seconds, preferably for between 60 and 120 seconds, more preferably for 90 seconds:
- said at least one product from microalgae; and
- said at least one non-microalgal vegetable fiber;
c. adding, to the mixture obtained in step b., at between 100 and 3,000 rpm, preferably at between 100 and 1,000 rpm, more preferably at 500 rpm, for between 60 and 350 seconds, preferably for between 60 and 120 seconds, more preferably for 90 seconds:
- said at least one non-microalgal vegetable flour and/or non-microalgal vegetable starch; and
- said at least one non-microalgal vegetable protein;

7. A method for obtaining a microalgae-based egg substitute in liquid form comprising the steps according to the preceding claim, further comprising a step d. of mixing the egg substitute in powder form obtained in step c. with water, preferably at a ratio of one part powder obtained in step c. to 6 to 9 parts water, at between 100 and 5,000 rpm, preferably at between 500 and 2,000 rpm, more preferably at 800 rpm, for 3 to 7 minutes

8. Use of the egg substitute according to claims 1 to 4 in the preparation of a food product, preferably in the preparation of sponge cakes, dessert bases, dessert dough, patisseries, viennoiseries, bakery products, or cookies.

9. A method for incorporating the microalgae-based egg substitute according to claims 1 to 4 into a food product, comprising incorporating between 0.5 and 5%, by the total weight of the food product, of the microalgae-based egg substitute according to the invention into the preparation of the food product.

10. A food product comprising between 0.5 and 5%, by weight of said food product, of the microalgae-based egg substitute according to any of claims 1 to 4.
